# FASCICULE DE BREVET EUROPEEN

(11) **EP 0 865 728 B1**
(45) Date de publication et mention de la délivrance du brevet: **30.05.2001**
(21) Numéro de dépôt: 98500039.7
(22) Date de dépôt: 11.02.1998
(51) Int. Cl.: A01K 23/00, A01K 21/00

(54) **Un dispositif d'hygiène et de protection pour chiens**
Gerät für Hygiene und Schutz bei Hunden
Device for the hygiene and protection of dogs

(30) Priorité: 14.02.1997 ES 9700399 U
(43) Date de publication de la demande: 23.09.1998
(73) Titulaire: Lopez Candil, Enrique, 08980 Sant Feliu de Llobregat, (Barcelona) (ES)
(72) Inventeur: Lopez Candil, Enrique, 08980 Sant Feliu de Llobregat, (Barcelona) (ES)
(74) Mandataire: Manresa Val, Manuel

(56) Documents cités:
- FR-A- 2 469 117
- GB-A- 691 419
- US-A- 3 176 657
- US-A- 4 502 417

## Description

L'objet de la présente invention concerne un dispositif d'hygiène et de protection pour chiens constituant un élément très efficace pour le but visé et qui est incomparable par rapport à tout autre dispositif connu pour ces animaux.

Le fait que de nombreux chiens salissent les rues et les lieux publics avec leurs excréments est bien connu, c'est là un motif de dégoût, et de précaution pour les piétons. En fait, on connaît déjà divers éléments pour pallier ces inconvénients, la plupart étant constitués par des engins sous forme de pelles ou d'outils de ramassage plus ou moins appropriés pour que le propriétaire de l'animal ramasse du sol l'excrément récent de son chien. En plus que le sol en question ne reste pas tout à fait propre, sans aucun doute, cette opération est désagréable pour le propriétaire du chien.

On connaît également d'autres dispositifs, tel que celui du Brevet espagnol ES 2 068 757 R concernant un accessoire collecteur d'excréments pour chiens, constitué par une courroie de retenue dessinée à entourer le corps du chien, près des pattes antérieures, à laquelle sont fixées trois bretelles élastiques, une supérieure et deux latérales-inférieures, la première s'ouvrant au niveau de la queue du chien en deux autres bretelles courtes qui sont fixées aux extrémités d'un coussinet annulaire destiné à entourer la zone de l'anus du chien, un coussinet annulaire auquel sont également fixées les extrémités des bretelles inférieures après avoir passé à l'intérieur des pattes postérieures du chien. Ce coussinet annulaire est muni d'un élément filiforme convenablement fixé à celui-ci, déterminant des protubérances sous forme de créneaux auxquels on peut adapter l'entrée d'une poche en plastique qui constitue le collecteur proprement dit, cette poche étant fixée par le biais d'une bague en caoutchouc qui tend à étrangler l'entrée de la poche contre les créneaux de cet élément filiforme et qui provoque la fermeture automatique de cette poche lorsqu'elle se dégage de l'accessoire collecteur en son ensemble.

Ce brevet présent l'inconvénient de sa myriade de bandes et de courroies ayant divers moyens de fixation ce qui rend très compliqués autant sa propre structure que la pose et dépose sur l'animal.

Par ailleurs, il faut citer le Modèle d'Utilité espagnol ES-U-9401149 concernant un collecteur et reteneur d'excréments de chiens et de chats qui offre la forme d'un polygone presque régulier et que est fabriqué en une matière plastique résistant l'humidité, il s'adapte pour couvrir complètement aussi bien la partie de l'échine de l'animal que les arrière-trains et bas ventre de celui-ci et est équipé de huit points en matériau adhésif situés sur les deux surfaces et occupant les quatre coins du polygone, ce qui permet une fermeture parfaite du collecteur sans laisser de fentes pour que l'excrément puisse sortir à l'extérieur si, les huit points adhésifs ne sont pas volontairement séparés auparavant.

Ce dispositif n'est évidemment pas hygiénique car à part de salir le propre animal, il salit également le dispositif avec les désavantages qui s'ensuivent d'avoir à laver ce dispositif et des conditions non hygiéniques.

Finalement, on connaît également le Modèle d'Utilité espagnol ES-U-291908 concernant un protecteur pour chiens, consistant en un film flexible, avantageusement à un seul usage, muni de bandes flexibles ayant des moyens de fixation autour du corps et la base de la queue de l'animal, ce film couvrant l'anus de celui-ci sous forme de poche contenant les selles.

Ce modèle offre les mêmes désavantages que le précédent et n'est, de plus, que pour un seul usage.

La présente invention offre un dispositif tout à fait différent desdits engins, pelles ou ramasseurs et qui règle les inconvénients suscités.

En effet, ladite invention fait connaître un dispositif semblable à un harnais qui est fixé sur le corps de l'animal et qui, basiquement, porte un réceptacle, remplaçable, juste sous la partie arrière du chien. Ainsi, donc, le propriétaire du chien n'a qu'à décrocher ce réceptacle du harnais lorsqu'il est plein et le jeter à la poubelle ou un lieu approprié, en le remplaçant ensuite par un autre vide et neuf.

Ces avantages et d'autres, aussi bien d'hygiène que de protection pour le propre animal seront mieux compris dans l'explication suivante.

Afin de faciliter l'explication, deux feuilles de dessins sont annexées à cette description, dans lesquelles un cas pratique de mise en oeuvre a été illustré, qui n'est cité que comme exemple non limitatif de l'étendue de la présente invention.

Dans ces feuilles de dessins:

La figure 1 montre une vue générale d'un chien portant le présent dispositif.

La figure 2 représente une vue en détails de ce même dispositif pourvu d'un réceptacle pour excréments.

La figure 3 illustre un autre détail du dispositif pourvu d'un élément pour le rétrécir et l'adapter à la taille d'un chien plus petit.

La figure 4 est un détail des moyens pour retenir et dégager le réceptacle d'excréments.

La figure 5 représente une application optionnelle du même dispositif appropriée pour éviter que les mictions du chien n'arrive aux arbres et surtout aux murs et aux roues des véhicules.

Et la figure 6 correspond à une autre application optionnelle de ce dispositif qui protège l'animal de la possibilité d'être couvert.

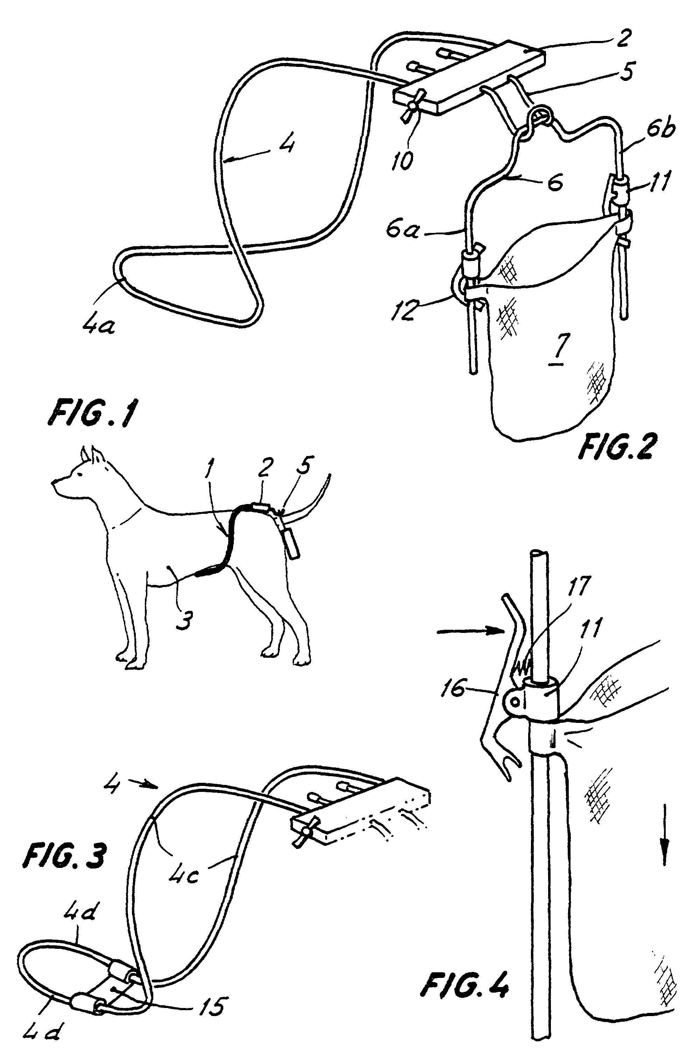

D'après ces figures (fig. 1 et 2), le dispositif d'hygiène et de protection pour chiens, objet de la présente invention, est basiquement constitué par une espèce de harnais (1) composé par une traverse centrale (2) qui repose sur le dos du chien (3). Une tringlerie flexible de fixation (4) sort de la partie avant de cette traverse (2) tandis que de la partie arrière de cette traverse (2) part une espèce de crochet (5) susceptible d'y accrocher divers accessoires.

La tringlerie de fixation (4) comporte une tige qui sort de cette traverse (2), comme il déjà été dit, passe par un des flancs du chien, descend, passe à travers son ventre, remonte par l'autre flanc et revient à ladite traverse (2). Lorsque l'animal est mâle, la partie inférieure (4a) de cette tringlerie reste dirigée vers la région du ventre de celui-ci afin de ne pas gêner les organes spécifiques, tandis que lorsqu'il s'agit d'une femelle, cette partie inférieure de la tringlerie (4b) reste dirigée vers la zone de l'entrejambe pour ne pas gêner les mamelons, surtout pendant la lactation. Ainsi, le dispositif (1) est fixé au corps de l'animal (3), et il a été vérifié que même si le chien court, le dispositif ne se détache pas de lui.

Au crochet (5) qui dépasse la traverse (2), on peut suspendre et fixer un accessoire (6) en "U" inverti, également basé sur une tige entre les branches descendantes (6a, 6b) duquel sera soutenu, de façon amovible, un réceptacle ou un sac (7) ayant une embouchure ouverte et à proximité du derrière de l'animal.

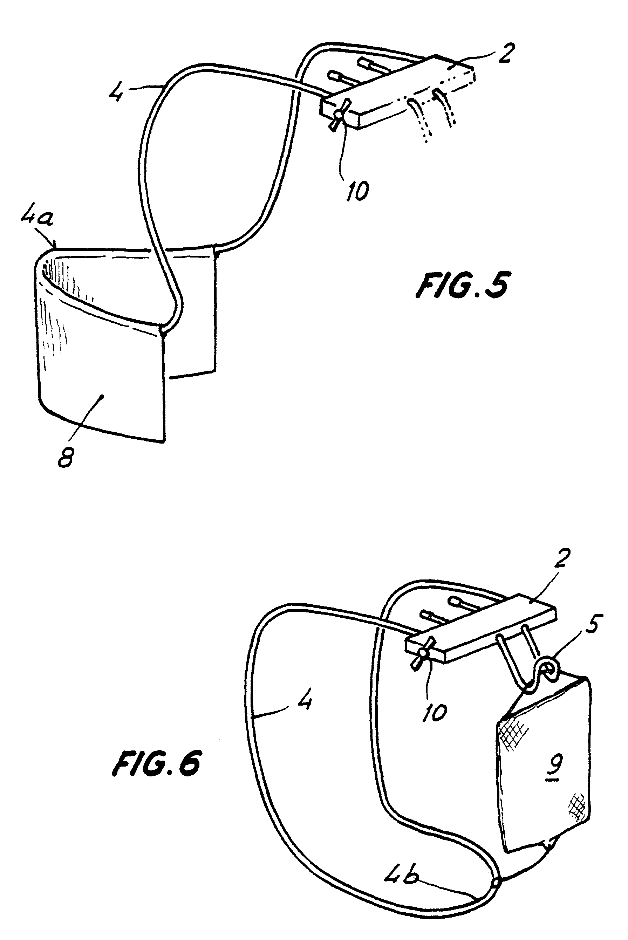

En même temps que l'application indiquée au paragraphe précédent, la partie moyenne et inférieure de la tringlerie (4a) pourra être munie d'une jupe (8), (fig. 5) surtout s'il s'agit d'un mâle, qui agissant en tant que déflecteur, évitera que les mictions n'arrivent aux arbres, aux roues des véhicules, aux murs des façades, etc. car s'il est vrai que les arbres peuvent supporter ces arrosages, il est hors de doutes qu'ils produisent des oxydations aux jantes des roues et des corrosions à certains types de briqueterie.

Finalement, (fig. 6) une alternative à l'application illustrée à la fig. 2 est celle d'incorporer un morceau de tissu, de toile, de plastique ou assimilé (9) entre le crochet (5) et la partie centrale inférieure (4b) de ladite tringlerie (4). Évidemment ainsi, cela privera la femelle d'être couverte par quelque mâle.

Ledit harnais (1) sera fabriqué dans diverses tailles pour l'adapter aux diverses tailles de chiens. Par ailleurs, et dans ce même but, on pourra régler la saillie du crochet (5) en l'introduisant plus ou moins dans la traverse (2) et le verrouiller ensuite avec une vis de serrage (10). Plus encore, la partie inférieure de la tringlerie (4) est pourvue, lorsque cela sera utile, d'une agrafe (15) qui retiendra les deux branches (4d) plus proches, avec quoi les côtés (4c) se rapprocheront également, tel qu'il faudra pour un chien aux caractéristiques moins développées (fig. 3).

Les moyens soutenant le sac ou réceptacle (7) seront également coulissants le long des branches du "U" (6a, 6b) pour s'adapter à la complexion de l'animal, ces moyens étant constitués par des collerettes (11) munies, par exemple de crochets (12) qui tiendront bien ce sac (7); lorsqu'on ouvre ces crochets (12), le sac (7) deviendra libre pour être enlevé et jeté. Une alternative à ces moyens de soutien du sac (7) est illustré dans la fig. 4 où la collerette (11) est illustrée, portant un levier (16) qui par son extrémité inférieure enclenche l'extrémité respective de l'embouchure du propre sac (7) et dont l'extrémité supérieure est munie d'un ressort (17) qui retient ledit levier (16) enclenché.

## Revendications

1. Dispositif d'hygiène et de protection pour chiens, comportant une espèce de harnais (1) ayant un crochet (5) à saillie variable, qui supporte un accessoire d'hygiène ou de protection tel qu'un sac (7) ou un morceau de tissu (9), comprenant une traverse (2) pouvant être appuyée sur le dos de l'animal (3), ledit crochet (5) sortant de la partie arrière de cette traverse (2), caractérisé en ce que de la partie avant de ladite traverse (2) sort une tringlerie (4) souple et réglable aux flancs et au ventre du chien.

2. Dispositif d'hygiène et de protection pour chiens selon la revendication 1, caractérisé en ce que la tringlerie (4) décrit, à sa partie inférieure, un coudage (4a) dirigé vers l'avant et pouvant être situé sur la zone du ventre du chien.

3. Dispositif d'hygiène et de protection pour chiens selon la revendication 1, caractérisé en ce que la tringlerie (4) décrit, à sa portion inférieure, un coudage (4b) dirigé vers l'arrière et pouvant être situé sur la zone de l'entrejambe de l'animal.

4. Dispositif d'hygiène et de protection pour chiens selon les revendications 2 ou 3, caractérisé en ce que l'accessoire d'hygiène ou de protection comporte un support en "U" inversée (6) entre les branches duquel est agencé de façon réglable en hauteur, amovible et remplaçable, un réceptacle (7) dont l'embouchure supérieure reste juste au dessous du derrière de l'animal.

5. Dispositif d'hygiène et de protection pour chiens selon la revendication 2, caractérisé en ce que dans ce coudage inférieur (4a, 4d) une jupe (8) est incorporée dirigée vers l'avant.

6. Dispositif d'hygiène et de protection pour chiens selon la revendication 3, caractérisé en ce que entre ce coudage inférieur (4b) de la tringlerie, dirigée vers l'arrière et le crochet (5) un morceau de tissu, toile, plastique ou assimilé (9) est agencé, de façon amovible, qui couvre la partie arrière de l'animal.

7. Dispositif d'hygiène et de protection pour chiens selon les revendications 2 ou 3, caractérisé en ce que le coudage inférieur (4a, 4b) de ladite tringlerie est pourvu de moyens tels qu'une agrafe (15) susceptible de resserrer ce coudage et les côtés (4c) du harnais même (1).

8. Dispositif d'hygiène et de protection pour chiens selon la revendication 4, caractérisé en ce que des moyens de soutien du réceptacle (7) sont formés par un collier (11) et des crochets (12).

9. Dispositif d'hygiène et de protection pour chiens selon la revendication 4, caractérisé en ce que des moyens de soutien du réceptacle (7) sont formés par un collier (11) portant un levier (16) à l'extrémité supérieure duquel est situé un ressort (17).

10. Dispositif d'hygiène et de protection pour chiens selon la revendication 1, caractérisé en ce que la traverse (2) a un élément de fixation pour assurer une position donnée.

## Patentansprüche

1. Hygiene- und Schutzvorrichtung für Hunde mit einer Art Geschirr (1), das einen Haken (5) verstellbarer Länge zum Halten eines Hygiene- oder Schutzzubehörteils wie z.B. einem Beutel (7) oder einem Stück Tuch (9) aufweist, mit einer Querleiste (2), die auf dem Rücken des Tieres (3) aufliegen kann, wobei der Haken (5) vom hinteren Teil der Querleiste (2) ausgeht, dadurch gekennzeichnet, daß vom Vorderteil der Querleiste (2) ein biegsames und an den Flanken und dem Bauch des Hundes verstellbares Gestänge (4) ausgeht.

2. Hygiene- und Schutzvorrichtung für Hunde nach Anspruch 1, dadurch gekennzeichnet, daß das beschriebene Gestänge (4) am unteren Teil ein nach vorne zeigendes abgekröpftes Stück (4a) aufweist, das sich am Bauchbereich des Hundes befinden kann.

3. Hygiene- und Schutzvorrichtung; für Hunde nach Anspruch 1, dadurch gekennzeichnet, daß das beschriebene Gestänge (4) am unteren Teil ein nach hinten zeigendes abgekröpftes Stück (4b) aufweist, das sich im Bereich zwischen den Beinen des Hundes befinden kann.

4. Hygiene- und Schutzvorrichtung für Hunde nach Anspruch 2 oder 3, dadurch gekennzeichnet, daß das Hygiene- bzw. Schutzzubehörteil eine Stütze in Form eines auf den Kopf gestellten "U" (6) aufweist, zwischen dessen Schenkel ein höhenverstellbares, abnehmbares und auswechselbares Behältnis (7) angebracht ist, dessen obere Öffnung sich direkt unterhalb des Gesäßes des Hundes befindet.

5. Hygiene- und Schutzvorrichtung für Hunde nach Anspruch 2, dadurch gekennzeichnet, daß in das untere ellbogenförmige Stück (4a, 4d) ein nach vorne zeigender Mantel (8) eingesetzt ist.

6. Hygiene- und Schutzvorrichtung für Hunde nach Anspruch 3, dadurch gekennzeichnet, daß zwischen dem nach hinten zeigenden unteren abgekröpften Stück (4b) des Gestänges und dem Haken (5) ein Stück Tuch, Stoff, Kunststoff oder ähnliches (9) abnehmbar angebracht ist, das den hinteren Teil des Tieres bedeckt.

7. Hygiene- und Schutzvorrichtung für Hunde nach Anspruch 2 oder 3. dadurch gekennzeichnet, daß das untere abgekröpfte Stück (4a, 4b) des Gestänges mit Mitteln wie z.B, einer Spange (15) versehen ist, mit der das abgekröpfte Stück und die Seiten (4c) des Geschirres (1) selbst enger gestellt werden können,

8. Hygiene- und Schutzvorrichtung für Hunde nach Anspruch 4, dadurch gekennzeichnet, daß Mittel zum Halten des Behältnisses (7) aus einem Klemmring (11) und Haken (12) bestehen.

9. Hygiene- und Schutzvorrichtung für Hunde nach Anspruch 4, dadurch gekennzeichnet, daß Mittel zum Halten des Behältnisses (7) aus einem Klemmring (11) mit Hebel (16) bestehen, an dessen oberen Ende sich eine Feder (17) befindet.

10. Hygiene- und Schutzvorrichtung für Hunde nach Anspruch 1, dadurch gekennzeichnet, daß die Querleiste (2) ein Befestigungselement zur Sicherung einer bestimmten Traglage aufweist.

## Claims

1. Sanitary and protecting device for dogs, comprising a harnesslike element (1) having a hook (5) with a variable protrusion supporting a sanitary or protecting fitting such as a bag (7) or a piece of fabric (9), comprising a crossbeam (2) which can be supported on the back of the animal (3), the said hook (5) exiting from the rear part of the said crossbeam (2) characterized in that from the front part of the said crossbeam (2) exits a flexible linkage (4) which can be fit to the flanks and belly of the dog.

2. Sanitary and protecting device for dogs according to claim 1, characterized in that the linkage (4), draws, at its lower part, a forwardly directed elbow (4a) and which can be located at the area of the belly of the dog.

3. Sanitary and protecting device for dogs according to claim 1, characterized in that the linkage (4), draws, at its lower part, a backwardly directed elbow (4b) and which can be located at the area of the crotch of the animal.

4. Sanitary and protecting device for dogs according to claim 2 or 3, characterized in that the sanitary or protecting fitting comprises an inverted U-shaped support (6) between the limbs of which is arranged adjustable in height, removable and replaceable a receptacle (7) the higher mouth of which remains just under the animal behind.

5. Sanitary and protecting device for dogs according to claim 2, characterized in that in the said lower elbow (4a, 4d), a skirt (8) is incorporated forwardly directed.

6. Sanitary and protecting device for dogs according to claim 3, characterized in that between the said lower elbow (4b) of the backwardly directed linkage and the hook (5) a piece of fabric, cloth, plastic or the like (9) is arranged, removable, which covers the rear part of the animal.

7. Sanitary and protecting device for dogs according to claim 2 or 3, characterized in that the lower elbow (4a, 4b) of the said linkage is provided with means such as a staple (15) which can shrink that elbow and the sides (4c) of the harness itself (1).

8. Sanitary and protecting device for dogs according to claim 4, characterized in that means for supporting the receptacle (7) are formed by a collar (11) and hooks (12).

9. Sanitary and protecting device for dogs according to claim 4, characterized in that means for supporting the receptacle (7) are formed by a collar (11) bearing a lever (16) at the higher end of which a spring (17) is located.

10. Sanitary and protecting device for dogs according to claim 1, characterized in that the crossbeam (2) has a fastening element for assuring a given position.
